# EUROPÄISCHE PATENTSCHRIFT

(11) **EP 3 485 621 B1**
(45) Veröffentlichungstag und Bekanntmachung des Hinweises auf die Patenterteilung: **21.08.2019**
(21) Anmeldenummer: 17735464.4
(22) Anmeldetag: 29.06.2017
(51) Int. Cl.: H04L 29/06, H04L 29/08, G06F 21/32, G06F 21/84, H04W 4/02

(54) **VERFAHREN ZUR BEREITSTELLUNG EINER ZUGANGSEINRICHTUNG ZU EINER PERSÖNLICHEN DATENQUELLE**
METHOD FOR PROVIDING AN ACCESS DEVICE FOR A PERSONAL DATA SOURCE
PROCÉDÉ DE FOURNITURE D'UN MOYEN D'ACCÈS À UNE SOURCE DE DONNÉES PERSONNELLES

(30) Priorität: 13.07.2016 DE 102016212819
(43) Veröffentlichungstag der Anmeldung: 22.05.2019
(73) Patentinhaber: Audi AG, 85045 Ingolstadt (DE)
(72) Erfinder: MERTENS, Joris, 85051 Ingolstadt (DE); HASLINGER, Georg, 85053 Ingolstadt (DE); KLUG, Markus, 85057 Ingolstadt (DE); OLLEFERS, Edwin, 85055 Ingolstadt (DE); HÉLOT, Jacques, 85051 Ingolstadt (DE)
(86) Internationale Anmeldenummer: PCT/EP2017/066164
(87) Internationale Veröffentlichungsnummer: WO 2018/010968

(56) Entgegenhaltungen:
- US-A1- 2015 019 995
- US-B1- 8 261 090

## Beschreibung

Die Erfindung betrifft ein Verfahren zur Bereitstellung einer Zugangseinrichtung zu einer persönlichen Datenquelle einer Person. Eine persönliche Datenquelle einer Person ist dabei eine Datenquelle, welche persönliche Daten oder Informationen der Person enthält, bereitstellt oder bereitstellen kann und/oder der Person gehört und/oder aufgrund einer entsprechenden Nutzungsberechtigung von der Person genutzt wird oder genutzt werden darf. Selbstverständlich kann die Datenquelle neben persönlichen Daten zusätzlich oder alternativ auch andere Daten und Informationen enthalten. Eine Datenquelle kann beispielsweise ein Speichermedium, eine Speichereinrichtung oder ein Bereich oder Teilbereich einer Speichereinrichtung oder eines Speichermediums, aber auch ein, insbesondere elektronisches, Gerät mit einem Speichermedium oder einer Speichereinrichtung oder dergleichen sein.

Im Alltag ist heutzutage eine Datennutzung oder ein Zugriff auf verschiedenste Arten von Daten und Informationen oftmals nahezu permanent und in verschiedensten Situationen gewünscht. Aus dem Stand der Technik sind entsprechend vielfältige Nutzungs- und Zugriffsmöglichkeiten für Daten bekannt. Effektiv gibt es dabei jedoch oftmals eine Vielzahl von Einschränkungen, besonderen Anforderungen und Schwierigkeiten. So kann beispielsweise eine Nutzung bestimmter Daten oder ein Zugriff auf bestimmte Daten an ein spezifisches Gerät gebunden sein, welches die Person demzufolge stets mit sich führen müsste, was jedoch nicht immer praktikabel ist. Bei der Nutzung unterschiedlicher Geräte gibt es oftmals Schwierigkeiten durch stark unterschiedliche Interfaces, beispielsweise Benutzer- oder Bedienschnittstellen, und es kann für einen Benutzer beispielsweise notwendig sein, eine Vielzahl von unterschiedlichen Passwörtern zu memorieren. Weitere Schwierigkeiten, die auftreten können, können beispielsweise ein Zurechtfinden im Umgang mit den vielen unterschiedlichen Interfaces, eine mangelnde Möglichkeit zur Nutzung einer kabellosen Datenverbindung - beispielsweise hinsichtlich einer verfügbaren Bandbreite, Signalqualität oder eines entsprechenden Netzausbaus -, eine eingeschränkte Energieversorgung eines mobilen Endgeräts oder auch ein beispielsweise aus Sicherheitsgründen bestehendes Verbot einer Nutzung bestimmter elektronischer Geräte umfassen. Diesen Problemen soll mit der vorliegenden Erfindung begegnet werden.

US Patentanmeldung US2015/019995 ist weiterer Stand der Technik.

Aufgabe der vorliegenden Erfindung ist es, einerseits ein Verfahren zur Bereitstellung einer Zugangseinrichtung zu einer persönlichen Datenquelle einer Person anzugeben, welches eine besonders komfortable und einfache Datennutzung ermöglicht, und andererseits ein Speichermedium mit einem zur Ausführung des Verfahrens eingerichteten Programmcode sowie eine Servereinrichtung mit einem solchen Speichermedium bereitzustellen.

Diese Aufgabe wird gelöst durch ein Verfahren, ein Speichermedium und eine Servereinrichtung gemäß den unabhängigen Patentansprüchen. Vorteilhafte Ausgestaltungen und Weiterbildungen der Erfindung sind in den abhängigen Ansprüchen angegeben.

Um eine besonders komfortable und einfache Datennutzung zu ermöglichen, ist erfindungsgemäß ein Verfahren zur Bereitstellung einer Zugangseinrichtung zu einer persönlichen Datenquelle einer Person vorgesehen, bei dem zunächst von einer Beobachtungsvorrichtung mittels einer Erkennungseinrichtung selbsttätig ein Standort der Person innerhalb eines Erfassungsbereiches der Erkennungseinrichtung erkannt und selbsttätig die Person identifiziert wird. Die Erkennungseinrichtung kann beispielsweise eine Kamera umfassen und die Identifizierung der Person kann beispielsweise durch eine Gesichtserkennung erfolgen, wobei beispielsweise ein Abgleich von mittels der Kamera erfassten Bildinformationen, aus diesen durch eine entsprechende Auswertung ermittelten Daten oder Eigenschaften und/oder weiteren mittels der Erkennungseinrichtung erfassten Informationen mit einer entsprechenden Datenbank vorgesehen sein kann. Die weiteren Informationen können beispielsweise eine erfasste Körpergröße, besondere körperliche Merkmale, ein Sprach- oder Stimmmuster oder dergleichen umfassen. Das Erkennen des Standortes einer Person innerhalb des Erfassungsbereiches kann auch ein einfaches Erkennen einer Person bedeuten, da damit ja zwangsläufig einhergeht, dass sich der Standort der Person innerhalb des Erfassungsbereiches befindet. Insbesondere bei Erfassungsbereichen, die eine Mehrzahl möglicher Standorte oder eine Mehrzahl von Personen beinhalten können, kann jedoch auch eine genauere Standortbestimmung oder Verortung der Person vorgesehen sein.

Nach erfolgreicher Identifizierung der Person wird in einem nächsten Verfahrensschritt mittels einer mit der Beobachtungsvorrichtung durch eine Datenverbindung verbundenen Anzeigeeinrichtung auf einer an dem Standort von der Person einsehbaren Anzeigefläche ein der Person anhand ihrer Identität zugeordnetes personalisiertes Symbol dargestellt. Die Erkennungseinrichtung und die Anzeigeeinrichtung können dabei auch Teil der Beobachtungsvorrichtung, das heißt Teil eines zusammenhängenden Gerätes oder einer zusammenhängenden Geräteanordnung, sein. Insbesondere ist es aber vorgesehen, dass sowohl die Erkennungseinrichtung als auch die Anzeigeeinrichtung über jeweilige Datenverbindungen direkt oder indirekt mit der Beobachtungsvorrichtung verbunden sind. Die Datenverbindungen können insbesondere Teil eines Netzwerkes, beispielsweise eines Intranets oder des Internets, sein. Selbstverständlich ist es auch denkbar, dass etwa nur die Erkennungseinrichtung und die Anzeigeeinrichtung Teil eines gemeinsamen Gerätes sind, welches über eine Datenverbindung mit der Beobachtungsvorrichtung verbunden ist. Die Beobachtungsvorrichtung kann insbesondere eine Prozessoreinrichtung zum Empfang, zur Verarbeitung und zur Ausgabe von Daten sein und muss dementsprechend selbst keine optischen Beobachtungsmittel wie beispielsweise eine Kamera oder dergleichen aufweisen.

Sofern eine ausreichende Präzision und Geschwindigkeit der Erkennungseinrichtung gegeben ist, kann beispielsweise auch eine Blickrichtung und/oder eine Körperhaltung der Person erkannt und/oder überwacht oder verfolgt werden. Dann kann es vorgesehen sein, dass das Symbol zu einem jeweiligen Zeitpunkt jeweils auf einer Anzeigefläche dargestellt wird, welche sich tatsächlich in einem Blickfeld oder in einer Blickrichtung der Person befindet. Dementsprechend kann also die Anzeigefläche, auf der das Symbol dargestellt wird, im Laufe der Zeit oder im Laufe des Verfahrens auch wechseln. Ebenso ist es denkbar, dass das Symbol nur zu Zeitpunkten oder in Zeiträumen auf der Anzeigefläche dargestellt wird, zu beziehungsweise in denen es von der Person beispielsweise aufgrund ihrer Blickrichtung oder ihres Blickfeldes tatsächlich gesehen werden kann.

In einem weiteren Verfahrensschritt werden bei dargestelltem Symbol, das heißt während das Symbol auf der Anzeigefläche dargestellt ist, auf eine Bedienhandlung der Person hin Daten von der der Person anhand ihrer Identität zugeordneten persönlichen Datenquelle abgerufen und auf der Anzeigefläche dargestellt. Die Begriffe Symbol und Daten sind hier sehr breit und allgemein zu verstehen. So kann das Symbol beispielsweise ein gegenüber einer jeweiligen Umgebung abgesetztes oder hervorgehobenes, gegebenenfalls auch zeitlich variables, Lichtmuster, beispielsweise ein besonders heller Punkt oder Fleck, ein Wort oder eine Zeichenkette, eine geometrische oder abstrakte Form, ein Bild, eine Grafik oder dergleichen sein. Ebenso können aber prinzipiell auch beliebige andere erkennbare Kennzeichnungen, Oberflächeneigenschaften oder dergleichen, wie beispielsweise ein Muster auf einer mechanisch verformbaren Oberfläche, als dargestelltes Symbol aufgefasst werden und dienen. Die Personalisierung des Symbols bedeutet, dass das Symbol in zumindest einer Eigenschaft spezifisch auf die Person, der es zugeordnet ist, abgestimmt oder angepasst ist oder beispielsweise von der Person selbst entsprechend ihren Wünschen eingestellt oder vorgegeben ist. Dabei kann es vorgesehen sein, dass das Symbol oder dessen Gestaltung oder entsprechende Gestaltungsvorgaben in einer Speichereinrichtung beispielsweise der Beobachtungsvorrichtung abgelegt oder vorgehalten sind. Ebenso können das Symbol, dessen Gestaltung oder die entsprechenden Gestaltungsvorgaben aber auch in der der Person zugeordneten persönlichen Datenquelle gespeichert, abgelegt oder vorgehalten sein. Auch ist insbesondere bereits vor einer Bedienhandlung der Person eine Abrufen des Symbol oder der Gestaltung oder Gestaltungsvorgaben des Symbols von oder aus der Datenquelle möglich. Dadurch kann der Person vorteilhaft ihr persönliches Symbol dargestellt oder angezeigt werden, auch wenn sie noch keine Bedienhandlung zur Veranlassung eines Datenabrufs vorgenommen hat.

Durch die Personalisierung des Symbols wird vorteilhaft ein Wiedererkennungswert oder eine Wiedererkennbarkeit des Symbols verbessert oder erhöht, sodass die Person ihr persönliches, ihr zugeordnetes Symbol jederzeit möglichst einfach auch in ungewohnten Umgebungen oder auf unvertrauten Anzeigevorrichtungen oder Anzeigeflächen erkennen, identifizieren und wiederfinden kann. Durch die eindeutige Identifikation der Person wird vorteilhaft eine Falschzuordnung zwischen der Person und dem dargestellten Symbol verhindert und zudem ein besonders hohes Maß an Datensicherheit oder Sicherheit der Daten hinsichtlich eines unbefugten Zugriffs erzielt und gewährleistet. In diesem Zusammenhang kann es insbesondere vorgesehen sein, dass durch die Person, insbesondere im Vorhinein - also vor einem automatischen Datenabruf oder vor einer automatischen Datendarstellung - festgelegt, bestimmt oder eingestellt werden kann und/oder muss, welche Daten oder Datenarten von oder aus der Datenquelle abgerufen und/oder auf der Anzeigefläche dargestellt werden dürfen. Hierbei kann es beispielsweise auch verschiedene Niveaus von entsprechenden Berechtigungen und Einstellungen geben, sodass beispielsweise für verschiedene Standorte oder verschiedene Arten von Standorten und/oder verschiedene Arten von Anzeigeeinrichtungen oder Anzeigeflächen unterschiedliche Datenzugriffsberechtigungen vorgesehen sein oder vorgegeben werden können.

Bei der Bedienhandlung, auf die hin die Daten abgerufen und dargestellt werden, kann es sich beispielsweise um eine Berührung einer berührungsempfindlichen oder -sensitiven Oberfläche oder eines derartigen Bedienelements, beispielsweise eines Touchscreens oder Touchpads, um eine Bedienung eines Bediengeräts oder einer Bedieneinrichtung, wie etwa einer Tastatur, um eine Geste der Person, um einen Sprachbefehl oder ähnliches handeln. Dabei kann es insbesondere vorgesehen und notwendig sein, die Bedienhandlung auf an dem jeweiligen Standort verfügbare entsprechende Eingabe- und/oder Erkennungs- oder Erfassungsmittel zur Detektion der Bedienhandlung abzustimmen. Dementsprechend können also an verschiedenen Standorten auch verschiedene Bedienhandlungen oder Arten von Bedienhandlungen vorgesehen sein und genutzt werden.

Die Bedienhandlung kann eine direkte Interaktion mit dem Symbol oder mit der Anzeigefläche, auf der das Symbol dargestellt ist, umfassen oder sein. Ebenso ist es jedoch denkbar, dass die Bedienhandlung und/oder eine Erkennung oder eine Detektion der Bedienhandlung unabhängig von dem Symbol, der Darstellung des Symbols und/oder der Anzeigeeinrichtung und/oder der Anzeigefläche sein kann. Allerdings werden der Bedienhandlung entsprechende Handlungen nur dann als tatsächliche Bedienhandlung interpretiert, wenn zum Zeitpunkt der Handlung auch das Symbol dargestellt ist. Es ist beispielsweise denkbar, dass die Bedienhandlung auch von der Erkennungseinrichtung zum Erkennen des Standortes erkannt oder erfasst wird. Neben der Bedienhandlung zum Abrufen und zur Darstellung der Daten können auch weitere Bedienhandlungen vorgesehen oder möglich sein, mittels welcher die dargestellten oder auch darzustellenden Daten manipuliert werden können. So kann die Darstellung der Daten beispielsweise im Rahmen eines Interfaces, einer Menüstruktur oder dergleichen erfolgen und die Person kann hierüber durch die entsprechenden Bedienhandlungen die Daten manipulieren, mit den Daten interagieren, Einstellungen und Auswahlen treffen und dergleichen mehr. In diesem Sinne kann auch das dargestellte Symbol als Interface, Benutzerschnittstelle oder Bedienschnittstelle aufgefasst werden.

Nachdem der Standort der Person erkannt, die Person identifiziert und das personalisierte Symbol dargestellt worden ist, wird in einem weiteren Verfahrensschritt spätestens bei einem mittels der Erkennungseinrichtung detektieren Verlassen des Erfassungsbereiches durch die Person, das heißt also wenn die Person den Erfassungsbereich verlässt, die Darstellung des der Person zugeordneten personalisierten Symbols und der abgerufenen und dargestellten Daten auf der Anzeigefläche gestoppt. Das Verlassen des Erfassungsbereiches kann auch bedeuten, dass die Person und/oder der Standort der Person von der Erkennungseinrichtung nicht mehr erkannt oder festgestellt werden oder werden können. Mit anderen Worten kann es vorgesehen sein, dass die Darstellung des Symbols und/oder der Daten auch bei einem fehlgeschlagenen Versuch, den Standort der Person und/oder die Person zu erkennen, gestoppt wird. Weiterhin ist es denkbar, dass durch eine entsprechende Bedienhandlung oder Einstellung der Person die Darstellung der Daten und/oder des Symbols, insbesondere auch bereits vor dem Verlassen des Erfassungsbereiches, gestoppt wird. Die Person kann also die dargestellten Daten und/oder das Symbol jederzeit durch eine entsprechende Bedienhandlung ausblenden. Ebenso ist es denkbar, dass die Daten in jedem Falle - oder nur wenn die Person eine entsprechende Einstellung vorgenommen hat - jeweils nur für eine begrenzte vorgegebene Zeitspanne dargestellt oder eingeblendet werden.

Insgesamt ergibt sich durch das erfindungsgemäße Verfahren eine Vielzahl unterschiedlicher Vorteile. So kann die Darstellung des Symbols, der Daten und/oder eines Interfaces geräteunabhängig sein, sodass eine besonders einfache, schnelle und sichere Bedienbarkeit und Datennutzung ermöglicht wird, ohne dass sich die Person an eine Vielzahl unterschiedlicher Darstellungen oder Interfaces gewöhnen müsste. Dies kann beispielsweise Fehlbedienungen vermeiden und eine Effizienz bei der Datennutzung oder einer Informationsaufnahme erhöhen. Darüber hinaus kann vorteilhaft ein jeweiliges Registrieren, Authentifizieren oder Einloggen an jedem Gerät oder an jeder Bedien- und/oder Anzeigeeinrichtung durch die Person entfallen, was zu einer Zeitersparnis und einer erhöhten Sicherheit führen oder beitragen kann. Weiterhin ist es vorteilhaft, dass ein Zugriff auf die persönliche Datenquelle der Person auch dann ermöglicht wird, wenn diese beispielsweise ein herkömmlicherweise dafür verwendetes mobiles Endgerät nicht mit sich führt oder dieses nicht einsatzbereit ist oder nicht verwendet werden darf. Ein weiterer Vorteil kann es sein, dass die zur Darstellung der Daten genutzte Anzeigefläche deutlich größer sein kann als beispielsweise eine Anzeigefläche eines von der Person mitgeführten mobilen Endgeräts, sodass mehr Daten gleichzeitig darstellbar und/oder die dargestellten Daten besser und einfacher erkennbar sind.

In weiterer Ausgestaltung der Erfindung ist es vorgesehen, dass die Anzeigeeinrichtung und/oder die Anzeigefläche zur Darstellung des Symbols in Abhängigkeit von dem erkannten Standort der Person ausgewählt werden. Es können also an dem Standort und/oder in einer Umgebung des Standortes beispielsweise mehrere Anzeigeeinrichtungen und/oder Anzeigeflächen, zusammengefasst Anzeigemöglichkeiten, zur Verfügung stehen, von denen dann die jeweils am besten geeignete zur Darstellung des Symbols genutzt wird. Die am besten geeignete Anzeigemöglichkeit kann beispielsweise diejenige sein, die sich im geringsten Abstand zu der Person befindet, von dieser - beispielsweise hinsichtlich eines Blickwinkels - am besten einsehbar ist oder von der Person am besten erreichbar oder bedienbar ist. Ebenso können beispielsweise die Erkennungseinrichtung und/oder die Beobachtungsvorrichtung direkt oder indirekt mit einer Mehrzahl von Anzeigemöglichkeiten verbunden sein, wobei diese sich auch an räumlich voneinander getrennten Standorten befinden können. Die Auswahl der Anzeigemöglichkeit in Abhängigkeit von dem Standort oder von einer Standortveränderung der Person meint hier nicht minimale Bewegungen der Person, wie beispielsweise Veränderungen einer Körperhaltung oder -stellung. Vielmehr erfolgt die Auswahl oder eine Anpassung der ausgewählten Anzeigemöglichkeit beispielsweise bei einer Bewegung oder Standortveränderung der Person innerhalb eines Gebäudes, insbesondere zwischen verschiedenen Räumen des Gebäudes, bei einer Bewegung oder Standortveränderung der Person innerhalb einer Stadt, insbesondere zwischen verschiedenen Gebäuden oder Adressen der Stadt, oder bei einer Bewegung oder Standortveränderung der Person auf einem Niveau einer geografischen Region oder eines Landes oder auch auf internationalem Niveau. Hier kann es also eine Art Roaming geben, bei dem sich die Person auch beispielsweise durch eine Mehrzahl oder Vielzahl von Erfassungsbereichen unterschiedlicher Erkennungseinrichtungen bewegen kann und/oder sich derart bewegt, dass eine Anzeigefläche, die zu einem Zeitpunkt von der Person einsehbar ist, zu einem späteren Zeitpunkt von dem dann aktuellen Standort der Person nicht mehr einsehbar ist. Es kann aber beispielsweise auch eine Auswahl einer Anzeigemöglichkeit aus einer Mehrzahl zur Verfügung stehender Anzeigemöglichkeiten oder Anzeigebereichen innerhalb eines Fahrzeugs oder Verkehrsmittels, beispielsweise eines Flugzeugs, eines Schienenfahrzeugs, eines Omnibusses, eines Wasserfahrzeugs oder dergleichen, vorgesehen sein und erfolgen. Hierdurch wird vorteilhaft also sichergestellt, dass die Person auch bei unterschiedlichsten Bewegungsarten und Bewegungsprofilen Zugriff auf ihr persönliches oder personalisiertes Symbol und dementsprechend auf zumindest ihre persönliche Datenquelle hat.

In weiterer Ausgestaltung der Erfindung ist es vorgesehen, dass die dargestellten Daten in Abhängigkeit von einem räumlichen und/oder zeitlichen und/oder thematischen Kontext des Standortes und/oder der Person ausgewählt werden. Mit anderen Worten können also die dargestellten Daten, ein entsprechendes, insbesondere personalisiertes, Interface, eine Menüstruktur oder dergleichen kontextabhängig oder kontextbasiert sein oder angepasst werden. Dadurch kann vorteilhaft sichergestellt werden, dass in einer Vielzahl möglicher Situationen die jeweils relevantesten Daten besonders einfach einsehbar oder zugänglich sind. Durch die kontextabhängige Auswahl der dargestellten Daten können also die Effizienz bei der Daten- und/oder Interfacenutzung optimiert, eine Bedienung vereinfacht und somit ein Bedienkomfort verbessert werden. Eine Auswahl der dargestellten Daten in Abhängigkeit von einem räumlichen Kontext kann beispielsweise eine Darstellung eines Flugplans oder einer Übersicht von Abflugzeiten auf einem Flughafen, eine Darstellung einer Raumbelegung oder eines Programmplans an einem Veranstaltungsort, eine Darstellung touristischer Informationen in einer Umgebung einer Sehenswürdigkeit oder dergleichen bedeuten. Selbstverständlich kann hier, insbesondere anstelle dieser Informationen selbst, beispielsweise auch eine knappe listenartige Verknüpfung zu derartigen Informationen vorgesehen oder dargestellt werden. Für einen zeitlichen Kontext können beispielsweise ein Terminkalender der Person, eine Tages- oder Jahreszeit oder ein Datum - beispielsweise ein lokaler Feiertag - oder etwa Öffnungszeiten von unterschiedlichsten Einrichtungen an dem Standort oder in einer Umgebung des Standortes der Person berücksichtigt werden. Für einen thematischen Kontext können beispielsweise ein Thema oder Motto einer themenbezogenen Veranstaltung, ein Beruf oder eine Branche, in der die Person beschäftigt ist, oder dergleichen berücksichtigt werden. Ebenso ist es aber auch denkbar, dass die dargestellten Daten und/oder eine Art der Darstellung der Daten in Abhängigkeit oder unter Berücksichtigung von einer zur Verfügung stehenden oder genutzten Anzeigemöglichkeit ausgewählt werden. So können beispielsweise eine Größe der Anzeigefläche, eine Entfernung der Anzeigefläche von der Person und/oder die jeweils zur Verfügung stehenden Bedien- oder Interaktionsmöglichkeiten berücksichtigt werden.

In weiterer Ausgestaltung der Erfindung ist es vorgesehen, dass die Identifizierung der Person und/oder die Erkennung des Standortes durch eine Datenübermittlung von einem mobilen Endgerät der Person unterstützt werden. Ein derartiges mobiles Endgerät kann beispielsweise ein Mobiltelefon (Smartphone), ein tragbarer Computer, ein Tablet-Computer, eine entsprechend ausgestattete elektronische Armbanduhr (Smartwatch) oder dergleichen sein. Dabei kann das mobile Endgerät beispielsweise ein Signal aussenden, welches eine Identifizierung und/oder eine Authentifizierung ermöglicht oder unterstützt. Ein derartiges Signal kann beispielsweise eine persönliche Information der Person und/oder ein individuelles Identifizierungsmerkmal der Person und/oder des Gerätes, wie beispielsweise eine GUID-oder UUID-Zahl (von englisch "Globally Unique Identifier" oder "Universally Unique Identifier") oder eine Sicherheitszertifikat umfassen. Durch eine derartige Unterstützung kann vorteilhaft eine Sicherheit oder Zuverlässigkeit bei der Identifizierung der Person verbessert werden. Es ist auch denkbar, dass für einen Zugriff auf bestimmte persönliche und/oder besonders sicherheitsrelevante Daten eine derartige Unterstützung und/oder eine weitere Form einer Identifizierung oder Authentifizierung notwendig ist.

Dementsprechend ist es in weiterer Ausgestaltung der Erfindung explizit vorgesehen, dass einige oder alle Daten erst nach einer Authentifizierung der Person dargestellt werden. Dadurch kann vorteilhaft verhindert werden, dass unbefugte Personen Zugriff auf diese Daten erlangen oder in einer Umgebung der Person befindliche weitere Personen - beispielsweise in einem öffentlichen Raum - unbeabsichtigt Einsicht in diese Daten erlangen, wenn die genutzte Anzeigefläche auch von diesen weiteren Personen eingesehen wird oder werden kann.

In weiterer Ausgestaltung der Erfindung ist es vorgesehen, dass der jeweilige Standort mehrerer sich gleichzeitig innerhalb des Erfassungsbereiches aufhaltender Personen erkannt, die Personen identifiziert und jeder der Personen jeweils ein eigenes anhand ihrer jeweiligen Identität zugeordnetes personalisiertes Symbol dargestellt wird. Dementsprechend kann auch jede der Personen über das ihr zugeordnete persönliche und/oder personalisierte Symbol unabhängig voneinander und auch gleichzeitig Zugriff auf ihre jeweilige persönliche Datenquelle erhalten oder nehmen. Dies ermöglicht vorteilhaft eine besonders flexible und in vielfältigen Situationen und Umgebungen einsetzbare Anwendung des erfindungsgemäßen Verfahrens. Es ist auch denkbar, dass die Personen sich in mehreren Erfassungsbereiche aufhalten. Das kann einerseits bedeuten, dass am Standort einer, mehrerer oder aller der Personen sich jeweilige Erfassungsbereiche verschiedener Erkennungseinrichtungen überlappen oder überlagern. Es kann aber auch bedeuten, dass verschiedene Personen sich in unterschiedlichen, insbesondere voneinander getrennten, Erfassungsbereichen einer oder mehrerer Erkennungseinrichtungen aufhalten. Auch in diesem Fall beziehungsweise in diesen Fällen kann, insbesondere wenn die verschiedenen Erkennungseinrichtungen mit derselben Beobachtungsvorrichtung verbunden sind, eine gleichzeitige Identifizierung Symbolzuordnung erfolgen. Der Begriff der Gleichzeitigkeit hier auf einer Zeitskala menschlicher Wahrnehmung zu verstehen und nicht etwa auf einer Zeitskala individueller mikroskopischer Schaltvorgänge beispielsweise in einer Prozessoreinrichtung.

In weiterer Ausgestaltung der Erfindung ist es vorgesehen, dass die Daten von einer Speichereinrichtung einer im Internet betriebenen Servereinrichtung und/oder von einem mobilen Endgerät der identifizierten Person abgerufen werden. Hier kann beispielsweise für den Abruf der Daten jeweils diejenige Möglichkeit gewählt werden, die in der jeweiligen Situation die größte Bandbreite oder Übertragungsgeschwindigkeit bietet. Vorteilhaft sind so eine besonders flexible Verwendung unterschiedlicher Speichereinrichtungen oder Datenstandorte und ein optimaler Bedien- und Nutzungskomfort ermöglicht. Weiterhing vorteilhaft kann so auch eine Datensicherheit erhöht werden, indem beispielsweise nicht sämtliche Daten der Person in einer einzigen Speichereinrichtung abgelegt sein müssen und/oder nicht sämtliche Daten beispielsweise über das Internet zugänglich, erreichbar oder abrufbar sein müssen. Es ist beispielsweise denkbar, dass von dem mobilen Endgerät Daten über eine Nahfeldkommunikationsschnittstelle (NFC, Near Field Communication), über eine Bluetooth-Verbindung oder eine ähnliche lokale Datenverbindung abgerufen werden, ohne dass das mobile Endgerät, die Erkennungseinrichtung, die Anzeigeeinrichtung und/oder die Beobachtungsvorrichtung notwendigerweise mit dem Internet in Verbindung stehen und/oder die von dem mobilen Endgerät abgerufenen Daten über das Internet übertragen. Umgekehrt bietet die Möglichkeit, die Daten von der im Internet betriebenen Server- oder Speichereinrichtung abzurufen, vorteilhaft eine von einem spezifischen Endgerät oder einem Mitführen eines spezifischen Endgerätes unabhängige Nutzungsmöglichkeit der Daten und des erfindungsgemäßen Verfahrens und kann zudem beispielsweise eine Sicherheit gegenüber einem Verlust des mobilen Endgerätes bieten.

In weiterer Ausgestaltung der Erfindung ist es vorgesehen, dass die Beobachtungsvorrichtung eine im Internet betriebene Servereinrichtung, insbesondere mit einer Speichereinrichtung, ist oder umfasst, welche durch eine jeweilige Datenverbindung mit einer Mehrzahl von Anzeigeeinrichtungen verbunden ist und welche dazu eingerichtet ist, einen Standort der identifizierten Person nachzuverfolgen und der Person das personalisierte Symbol dauerhaft derart zuzuordnen, dass es bei einer Standortveränderung der Person dieser folgt und dazu die Anzeigeeinrichtung und/oder die Anzeigefläche zur Darstellung des Symbols jeweils in Abhängigkeit von dem aktuellen Standort der Person ausgewählt wird. Mit anderen Worten können also der Standort und/oder eine Bewegung der Person verfolgt werden. Dazu ist es insbesondere vorgesehen, dass die Beobachtungsvorrichtung Zugriff auf oder Zugang zu einer Mehrzahl von Erkennungseinrichtungen und/oder Anzeigeeinrichtungen aufweist oder besitzt. Dabei müssen vorteilhaft die einzelnen Erkennungs- und/oder Anzeigeeinrichtungen nicht notwendigerweise miteinander kommunizieren, sodass eine besonders einfache Implementierung oder Realisierung und auch eine stufenweise Ausdehnung eines Anwendungsbereiches des erfindungsgemäßen Verfahrens unter Einbindung unterschiedlicher Einrichtungen und Hardware auch an unterschiedlichen, voneinander unabhängigen Standorten möglich sind. Die Servereinrichtung kann dazu insbesondere auch ein Speichermedium mit einem Programmcode umfassen, der dazu eingerichtet ist, bei seiner Ausführung durch eine Prozessoreinrichtung der Servereinrichtung oder eines sonstigen elektronischen Geräts zumindest eine Variante des erfindungsgemäßen Verfahrens durchzuführen. Ein derartiges Speichermedium ist auch für sich genommen Teil der vorliegenden Erfindung.

Darüber hinaus betrifft und umfasst die vorliegende Erfindung eine Servereinrichtung mit einem derartigen Speichermedium.

Unabhängig von einer sonstigen weiteren Ausgestaltung der Erfindung kann es auch vorgesehen sein, dass zusätzlich zu den von der persönlichen Datenquelle abgerufenen Daten Informationen aus einer nicht spezifisch der identifizierten Person zugeordneten Datenquelle abgerufen und dargestellt werden. Dies können beispielsweise Informationen sein, die an dem jeweiligen Standort jeder Person unabhängig von ihrer Identität angezeigt werden sollen. Diese zusätzlichen Informationen können beispielsweise aus einer Speichereinrichtung einer dritten Person, eines Unternehmens, einer öffentlichen Stelle oder dergleichen abgerufen werden. Hierbei kann es sich beispielsweise um allgemeine Informationen - etwa in einem zeitlichen und/oder thematischen Kontext des jeweiligen Standortes - oder auch um allgemeine Verlautbarungen oder Mitteilungen handeln. In dieser Gestalt kann das Verfahren ähnlich einer Verbreitung oder Aussendung einer Rundfunkmitteilung genutzt werden, um beispielsweise besonders aktuelle Informationen einer Vielzahl von Personen mitzuteilen oder zugänglich zu machen. Ebenso ist es denkbar, dass die zusätzlichen Informationen beispielsweise Werbung umfassen oder darstellen.

Die bisher und im Folgenden sowie in den Patentansprüchen beschriebenen funktionalen Ausbildungen des erfindungsgemäßen Verfahrens, des erfindungsgemäßen Speichermediums und der erfindungsgemäßen Servereinrichtung sowie die entsprechenden Vorteil sind, soweit sinnvoll möglich, jeweils entsprechend sinngemäß wechselseitig zwischen dem Verfahren, dem Speichermedium und der Servereinrichtung und zur Ausführung oder Durchführung des Verfahrens verwendeten Einrichtungen und Bauteilen übertragbar.

Weitere Vorteile, Merkmale und Einzelheiten der Erfindung ergeben sich aus der nachfolgenden Beschreibung eines bevorzugten Ausführungsbeispiels sowie anhand der Zeichnungen. Dabei zeigen:
- Fig. 1: eine schematisch und perspektivisch dargestellte Situation, in der einer Person in einem privaten Umfeld Daten dargestellt werden;
- Fig. 2: eine weitere schematisch und perspektivisch dargestellte Situation, in der der Person Daten in einer öffentlichen Umgebung dargestellt werden; und
- Fig. 3: eine schematische beispielhafte Datendarstellung an oder in unterschiedlichen Fahrzeugen.

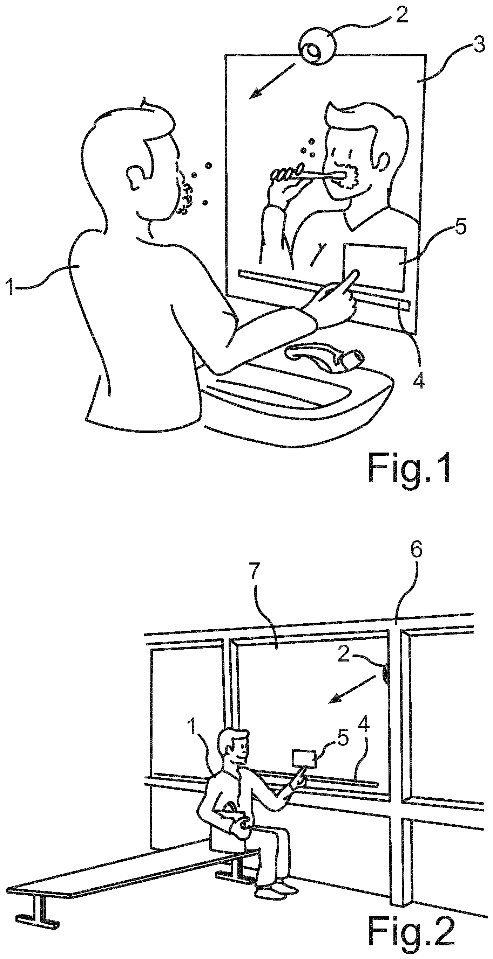

Fig. 1 zeigt eine schematisch und perspektivisch dargestellte Situation, in der eine Person 1 sich in einem privaten Umfeld, beispielsweise in einem Badezimmer, aufhält. Die Person 1, insbesondere ein Gesicht der Person 1, befindet sich dabei in einem Erfassungsbereich einer Erkennungseinrichtung, die vorliegend eine Kamera 2 umfasst. Die Kamera 2 kann eine Rechen- oder Prozessoreinrichtung umfassen, mittels welcher anhand von mit der Kamera 2 aufgenommenen Bilddaten eine Gesichtserkennung durchgeführt und so die Person 1 identifiziert werden kann. Darüber hinaus ist die Kamera 2 direkt oder indirekt mit einer hier nicht dargestellten Beobachtungsvorrichtung verbunden, an die die erkannte Identität der Person 1 übertragen wird. Alternativ ist es auch denkbar, dass die von der Kamera 2 erfassten Bilddaten oder eine Auswahl oder ein Ausschnitt dieser Bilddaten, welcher besonders zur Identifizierung der Person 1 geeignet ist, an die Beobachtungsvorrichtung übertragen werden, welche dann eine entsprechende Auswertung und/oder Verarbeitung dieser übertragenen Bilddaten zur Identifizierung der Person 1 vornimmt.

Die Beobachtungsvorrichtung ist auch direkt oder indirekt über eine Datenverbindung mit einer Anzeigeeinrichtung verbunden, die vorliegend als Anzeigefläche einen Spiegel 3 oder zumindest einen Teilbereich des Spiegels 3 umfasst. Beispielsweise kann in oder an dem Spiegel 3 zumindest bereichsweise ein, insbesondere berührungsempfindlich, das heißt als Touchscreen, ausgebildeter Bildschirm vorgesehen oder angeordnet sein. Auf dem Spiegel 3 kann somit, insbesondere gesteuert von der Beobachtungsvorrichtung, ein Symboldarstellungsbereich 4 angezeigt oder dargestellt werden. Vorliegend ist als Symboldarstellungsbereich 4 ein Licht- oder Leuchtband, das heißt ein schmaler, lang ausgedehnter leuchtender Bereich vorgesehen. Als Symbol kann beispielsweise ein Abschnitt oder Teilbereich des Symboldarstellungsbereiches 4 besonders hell oder in einem bestimmten Muster leuchten und dadurch gegenüber dem übrigen Symboldarstellungsbereich 4 und auch gegenüber der übrigen Fläche des Spiegels 3 hervorgehoben sein. Das derart dargestellte Symbol ist insbesondere der Person 1 in Abhängigkeit von deren erkannter Identität individuell und persönlich zugeordnet. Auf eine Bedienhandlung der Person 1 hin wird - ebenfalls auf dem Spiegel 3 - eine Datendarstellung 5 angezeigt. Bei der Bedienhandlung kann es sich beispielsweise um ein Berühren des Symbols, eine vorgegebene definierte Geste, einen Sprachbefehl oder dergleichen handeln.

Die Datendarstellung 5 kann hier insbesondere eine personalisierte und kontextabhängige Menüstruktur und/oder ein entsprechendes Interface umfassen. Damit ist also der Person 1 eine weitergehende Interaktion mit der Datendarstellung 5 ermöglicht. Die Person kann beispielsweise durch die Menüstruktur navigieren, bestimmte andere Daten darstellen lassen, Einstellungen vornehmen oder dergleichen mehr. Der Symboldarstellungsbereich 4 kann beispielsweise dauerhaft angezeigt werden, wodurch der Person 1 bereits aus größerer Entfernung signalisiert werden und die Person somit bereits von außerhalb des Erfassungsbereiches der Kamera 2 erkennen kann, dass hier eine Anzeigefläche für ihre Daten oder eine Interaktionsmöglichkeit mit ihren Daten gegeben ist. Es kann auch denkbar sein, die Art, die Gestalt, die Farbe oder eine sonstige Eigenschaft des Symboldarstellungsbereiches 4 und/oder der Datendarstellung 5 in Abhängigkeit von jeweils konkret zur Verfügung stehenden Bedien- oder Interaktionsmöglichkeiten anzupassen. Beispielsweise kann eine andere Farbe vorgesehen sein, wenn der Spiegel 3 nur als anzeigender Bildschirm, nicht jedoch als Touchscreen ausgebildet ist. Es ist aber auch denkbar, dass der Symboldarstellungsbereich 4 ebenso wie das Symbol selbst erst dann automatisch dargestellt wird, wenn sich die Person 1 in den Erfassungsbereich der Kamera 2 bewegt und/oder sich dem Spiegel 3 bis auf einen vorbestimmten Abstand nähert. Auch dieser Abstand kann dabei beispielsweise abhängig von der Größe des Spiegels 3 oder der Größe der Anzeigefläche oder von den verfügbaren Anzeige- und Bedienmöglichkeiten vorgegeben und/oder von der Person angepasst werden.

Durch die automatische Erkennung und Identifizierung der Person 1 kann also beispielsweise eine Passworteingabe entfallen. Um die Sicherheit zu erhöhen, kann jedoch auch hier eine zusätzliche Abfrage beispielsweise eines Passworts oder eines Pincodes vorgesehen sein, um Zugriff auf die Datendarstellung 5 oder bestimmte Teile davon zu erlangen. Besonders vorteilhaft kann das Passwort dabei unabhängig von der jeweils konkret verwendeten Erkennungseinrichtung und Anzeigeeinrichtung sein. Die Beobachtungsvorrichtung kann bevorzugt eine im Internet betriebene Server- und/oder Prozessoreinrichtung umfassen. Dies ermöglicht demnach, dass der Person an ihrem jeweiligen Standort auch über Standortveränderungen hinweg ihr persönliches Symbol und ihre persönliche Datendarstellung 5 angezeigt werden können. Insbesondere kann so auch sichergestellt werden, dass die persönliche Datendarstellung 5 der Person 1 zu jedem Zeitpunkt nur an einem einzigen Standort dargestellt wird, wodurch die Sicherheit, beispielsweise gegenüber unbefugter Nutzung, zusätzlich erhöht werden kann.

Von der in Fig. 1 dargestellten Situation kann sich die Person 1 in ihrem normalen Alltag wegbewegen und beispielsweise ein in Fig. 2 schematisch, perspektivisch und ausschnittsweise dargestelltes Gebäude 6 aufsuchen. Bei dem Gebäude 6 kann es sich beispielsweise um ein öffentliches Gebäude wie etwa einen Flughafen, einen Bahnhof, eine öffentliche Verwaltungsstelle oder dergleichen handeln. Hier kann eine Fensterscheibe 7 des Gebäudes 6 als Anzeigefläche dienen, auf der der Symboldarstellungsbereich 4 und die Datendarstellung 5 angezeigt werden können. Als Erkennungseinrichtung kann auch hier eine Kamera 2 vorgesehen sein, deren Erfassungsbereich so ausgerichtet sein kann, dass sich in einem Nahbereich der Fensterscheibe 7 aufhaltende Personen erkannt und identifiziert werden können. Als Nahbereich kann beispielsweise ein Bereich gelten, innerhalb dessen die Datendarstellung 5 von der Person 1 zuverlässig einsehbar oder erkennbar ist und/oder eine Bedienung oder Interaktion der beziehungsweise mit der Datendarstellung 5 durch die Person 1 möglich ist. Als weiteres Beispiel kann das Gebäude 6 auch ein Hotel sein, wobei dann im Zuge einer kontextbasierten Auswahl der dargestellten Daten beispielsweise touristische Informationen, Reiseinformationen oder dergleichen in der Datendarstellung 5 angezeigt werden oder enthalten oder verlinkt sein können.

Da auch in dem Gebäude 6 eine automatische Erkennung und Identifizierung der Person 1 sowie eine automatische Darstellung des Symboldarstellungsbereiches 4 und gegebenenfalls der persönlichen Datendarstellung 5 erfolgt, ergibt sich aus Sicht der Person 1 also, dass das Symbol und somit die Zugriffsmöglichkeit auf ihre persönlichen Daten ihr folgen. Da in der Datendarstellung 5 von einer der Person 1 aufgrund oder anhand ihrer Identität zugeordneten persönlichen Datenquelle abgerufene Daten dargestellt werden, ist es besonders wichtig, dass die Darstellung dieser Daten spätestens dann gestoppt wird, wenn die Person 1 sich aus dem Erfassungsbereich der Kamera 2 entfernt. Dementsprechend haben dann auch in einem öffentlichen Raum keine weiteren Personen Zugriff auf die persönlichen Daten der Person 1. Dies gilt auch dann, wenn eine weitere Person dieselbe Fensterscheibe 7 zur Darstellung von Daten nutzt wie zuvor die Person 1. Eine nachfolgende Person hat also keine Möglichkeit, zuvor der Person 1 dargestellte von der persönlichen Datenquelle der Person 1 abgerufene Daten abzurufen oder erneut darstellen zu lassen.

Gerade für öffentliche Räume ist es dabei weiterhin besonders wichtig, dass eine Mehrzahl von Personen gleichzeitig mit ihren persönlichen Daten interagieren oder je nach den jeweils gegebenen Möglichkeiten ihre Daten zumindest angezeigt bekommen können. Dementsprechend erfolgt eine automatische Erkennung und Identifizierung auch mehrerer Personen gleichzeitig, wobei dann jeder Person individuell ihr eigenes Symbol und ihre eigene Datendarstellung 5 zugeordnet und angezeigt werden oder werden können.

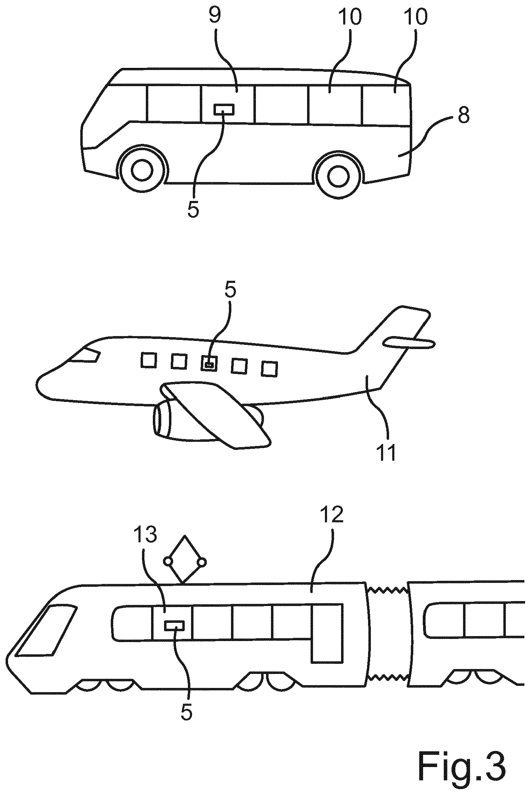

Fig. 3 zeigt beispielhaft schematische Seitenansichten mehrerer unterschiedlicher Fahrzeuge, in denen ebenfalls die Datendarstellung 5 angezeigt werden kann. Als erstes der Fahrzeuge ist ein Omnibus 8 dargestellt, bei dem die Datendarstellung beispielsweise in einer Fensterscheibe 9 angezeigt werden kann. Bevorzugt sind dabei auch die übrigen Fensterscheiben 10 des Omnibusses 8 zur Darstellung der Datendarstellung 5 eingerichtet, sodass eine standort- oder positionsgenaue Anzeige der Datendarstellung 5 möglich ist, wenn die Person 1 beispielsweise innerhalb des Omnibusses 8 einen anderen Sitzplatz aufsucht. Als zweites der Fahrzeuge ist ein Flugzeug 11 dargestellt, bei dem in analoger Weise die Datendarstellung 5 ebenfalls in einem Seitenfenster angezeigt werden kann. Als drittes der Fahrzeuge ist ein Zug 12 dargestellt und auch hier kann die Datendarstellung 5 beispielsweise in einem Seitenfenster oder einer Fensterscheibe 13 dargestellt werden. Sowohl bei Fahrzeugen 8, 11, 12 als auch bei Gebäuden 6 können selbstverständlich zusätzlich oder alternativ auch andere Flächen oder Bauteile oder Einrichtungen als die jeweiligen Fensterscheiben 7, 9, 10, 13 als Anzeigefläche zur Darstellung des Symboldarstellungsbereiches 4, des Symbols und/oder der Datendarstellung 5 dienen. Prinzipiell ist eine entsprechende Darstellung auf jeder beliebigen geeigneten Oberfläche denkbar.

## Patentansprüche

1. Verfahren zur Bereitstellung einer Zugangseinrichtung zu einer persönlichen Datenquelle einer Person (1), bei dem von einer Beobachtungsvorrichtung
- mittels einer Erkennungseinrichtung (2) selbsttätig ein Standort (6,8,11,12) der Person innerhalb eines Erfassungsbereiches der Erkennungseinrichtung (2) erkannt und selbsttätig die Person (1) identifiziert wird;
- der Person (1) mittels einer mit der Beobachtungsvorrichtung durch eine Datenverbindung verbundenen Anzeigeeinrichtung auf einer an dem Standort (6,8,11,12) von der Person (1) einsehbaren Anzeigefläche (3, 7,9,10,13) ein der Person (1) anhand ihrer Identität zugeordnetes personalisiertes Symbol dargestellt wird; und
- bei dargestelltem Symbol auf eine Bedienhandlung der Person (1) hin Daten (5) von der der Person (1) anhand ihrer Identität zugeordneten persönlichen Datenquelle abgerufen und auf der Anzeigefläche (3,7,9,10,13) dargestellt werden,
**dadurch gekennzeichnet, dass**
- spätestens bei einem mittels der Erkennungseinrichtung (2) detektierten Verlassen des Erfassungsbereiches durch die Person (1) die Darstellung des dieser zugeordneten Symbols und der abgerufenen Daten (5) auf der Anzeigefläche (3,7,9,10,13) gestoppt wird
- die Beobachtungsvorrichtung eine im Internet betriebene Servereinrichtung umfasst, welche durch eine jeweilige Datenverbindung mit einer Mehrzahl von Anzeigeeinrichtungen (3) verbunden ist, und welche dazu eingerichtet ist, den jeweiligen Standort der identifizierten Person (1) nachzuverfolgen und der Person (1) das personalisierte Symbol dauerhaft derart zuzuordnen, dass es bei einer Standortveränderung der Person (1) dieser folgt, wozu die Anzeigeeinrichtung und/oder die Anzeigefläche (3,7,9,10,13) zur Darstellung des Symbols jeweils in Abhängigkeit von dem erkannten aktuellen Standort (6,8,11,12) der Person (1) ausgewählt wird, wobei
- die Beobachtungsvorrichtung sicherstellt, dass die Daten (5) zu jedem Zeitpunkt nur an einem einzigen Standort dargestellt werden.

2. Verfahren nach einem der vorhergehenden Ansprüche,
**dadurch gekennzeichnet, dass**
die dargestellten Daten (5) in Abhängigkeit von einem räumlichen und/oder zeitlichen und/oder thematischen Kontext des Standortes (6,8,11,12) und/oder der Person (1) ausgewählt werden.

3. Verfahren nach einem der vorhergehenden Ansprüche,
**dadurch gekennzeichnet, dass**
die Identifizierung der Person (1) und/die Erkennung des Standortes (6,8,11,12) durch eine Datenübermittlung von einem mobilen Endgerät der Person (1) unterstützt wird.

4. Verfahren nach einem der vorhergehenden Ansprüche,
**dadurch gekennzeichnet, dass**
einige oder alle der Daten (5) erst nach einer Authentifizierung der Person dargestellt werden.

5. Verfahren nach einem der vorhergehenden Ansprüche,
**dadurch gekennzeichnet, dass**
der jeweilige Standort (6,8,11,12) mehrerer sich gleichzeitig innerhalb des Erfassungsbereiches aufhaltender Personen (1) erkannt, die Personen (1) identifiziert und jeder der Personen (1) jeweils ein eigenes anhand ihrer jeweiligen Identität zugeordnetes personalisiertes Symbol dargestellt wird.

6. Verfahren nach einem der vorhergehenden Ansprüche,
**dadurch gekennzeichnet, dass**
die Daten (5) von einer Speichereinrichtung einer im Internet betriebenen Servereinrichtung und/oder von einem mobilen Endgerät der identifizierten Person (1) abgerufen werden.

7. Speichermedium mit einem Programcode, der dazu eingerichtet ist, bei seiner Ausführung durch eine Prozessoreinrichtung eines elektronischen Geräts ein Verfahren nach einem der vorhergehenden Ansprüche durchzuführen.

8. Servereinrichtung zum Betreiben im Internet mit einem Speichermedium nach Anspruch 7.

## Claims

1. Method for providing an access device for a personal data source of a person (1), in which by an observation device,
- by means of a detection device (2) a location (6,8,11,12) of the person within a coverage area of the detection device (2) is automatically detected and the person (1) is automatically identified;
- by means of a display device connected via a data connection with the observation device, on a display surface (3, 7,9,10,13) visible to the person (1) at the location (6,8,11,12), a personalised symbol assigned to the person (1) on the basis of their identity is represented to the person (1); and
- when the symbol is represented, in reaction to an operating action of the person (1) data (5) are retrieved from the personal data source assigned to the person (1) on the basis of their identity and are represented on the display surface (3,7,9,10,13), **characterised in that**
- at the latest when the detection device (2) detects that the person (1) leaves the coverage area, the representation of the symbol assigned to said person and of the retrieved data (5) on the display surface (3,7,9,10,13) is stopped
- the observation device comprises a server device operated in the Internet, which is connected via a respective data connection with a multiplicity of display devices (3), and which is configured to track the respective location of the identified person (1) and to assign to the person (1) the personalised symbol in a permanent manner such that it follows the person when the location of the person (1) changes, to which end the display device and/or the display surface (3,7,9,10,13) for the representation of the symbol is selected respectively depending on the detected actual location (6,8,11,12) of the person (1), wherein
- the observation device ensures that the data (5) are at each point in time represented only at one single location.

2. Method according to any of the preceding claims,
**characterised in that**
the represented data (5) are selected depending on a spatial and/or temporal and/or thematic context of the location (6,8,11,12) and/or of the person (1).

3. Method according to any of the preceding claims,
**characterised in that**
the identification of the person (1) and/the detection of the location (6,8,11,12) are supported by a data transfer from a mobile end device of the person (1).

4. Method according to any of the preceding claims,
**characterised in that**
some or all of the data (5) are represented only after an authentication of the person.

5. Method according to any of the preceding claims,
**characterised in that**
the respective location (6,8,11,12) of several persons (1) being simultaneously within the coverage area is detected, the persons (1) are identified and respectively their own personalised symbol, assigned on the basis of their respective identity, is represented to each of the persons (1).

6. Method according to any of the preceding claims,
**characterised in that**
the data (5) are retrieved from a storage device of a server device operated in the Internet and/or from a mobile end device of the identified person (1).

7. Storage medium having a program code which is configured, at its execution on the part of a processor device of an electronic device, to carry out a method according to any of the preceding claims.

8. Server device for operating in the Internet having a storage medium according to claim 7.

## Revendications

1. Procédé de fourniture d'un dispositif d'accès à une source de données personnelle d'une personne (1), dans lequel un dispositif observateur
- au moyen d'un dispositif de reconnaissance (2), reconnaît automatiquement une position (6, 8, 11, 12) de la personne à l'intérieur d'une zone de détection du dispositif de reconnaissance (2) et identifie automatiquement la personne (1) ;
- au moyen d'un dispositif d'affichage relié au dispositif observateur par une liaison de données, présente à la personne (1) un symbole personnalisé, associé à la personne (1) à l'aide de son identité, sur une surface d'affichage (3, 7, 9, 10, 13) visible par la personne (1) à la position (6, 8, 11, 12) ; et
- alors que le symbole est présenté et suite à une opération de contrôle effectuée par la personne (1), appelle des données (5) de la source de données personnelle associée à la personne (1) à l'aide de son identité et les présente sur la surface d'affichage (3, 7, 9, 10, 13),
**caractérisé en ce que**
- au plus tard lors d'un départ, détecté au moyen du dispositif de reconnaissance (2), de la personne (1) de la zone de détection, la présentation du symbole associé à ladite personne et des données appelées (5) sur la surface d'affichage (3, 7, 9, 10, 13) est arrêtée,
- le dispositif observateur comprend un serveur fonctionnant via internet qui est relié par une liaison de données respective à une multiplicité de dispositifs d'affichage (3) et qui est conçu pour suivre la position respective de la personne (1) identifiée et pour associer durablement le symbole personnalisé à la personne (1) de telle sorte que, lors d'un changement de position de la personne (1), il la suit, ce pour quoi le dispositif d'affichage et/ou la surface d'affichage (3, 7, 9, 10, 13) destinés à la présentation du symbole sont sélectionnés à chaque fois en fonction de la position (6, 8, 11, 12) actuelle reconnue de la personne (1),
- dans lequel le dispositif observateur garantit que les données (5) sont présentées à chaque instant exclusivement en une seule position.

2. Procédé selon l'une quelconque des revendications précédentes,
**caractérisé en ce que**
les données présentées (5) sont sélectionnées en fonction d'un contexte spatial et/ou temporel et/ou thématique de la position (6, 8, 11, 12) et/ou de la personne (1).

3. Procédé selon l'une quelconque des revendications précédentes,
**caractérisé en ce que**
l'identification de la personne (1) et/la reconnaissance de la position (6, 8, 11, 12) est assistée par une transmission de données par un terminal mobile de la personne (1).

4. Procédé selon l'une quelconque des revendications précédentes,
**caractérisé en ce que**
certaines ou toutes les données (5) ne sont présentées qu'après une authentification de la personne.

5. Procédé selon l'une quelconque des revendications précédentes,
**caractérisé en ce que**
la position (6, 8, 11, 12) respective de plusieurs personnes (1) séjournant simultanément à l'intérieur de la zone de détection est reconnue, les personnes (1) sont identifiées et, à chacune des personnes (1), un symbole personnalisé particulier, associé à l'aide de son identité respective, est présenté à chaque fois.

6. Procédé selon l'une quelconque des revendications précédentes,
**caractérisé en ce que**
les données (5) sont appelées d'une mémoire d'un serveur fonctionnant via internet et/ou d'un terminal mobile de la personne (1) identifiée.

7. Support de mémoire avec un code de programme qui est conçu pour, lors de son exécution par un processeur d'un appareil électronique, mettre en oeuvre un procédé selon l'une quelconque des revendications précédentes.

8. Serveur destiné à fonctionner via internet avec un support de mémoire selon la revendication 7.
